# EUROPÄISCHE PATENTANMELDUNG

(11) **EP 2 065 082 A1**
(43) Veröffentlichungstag der Anmeldung: **03.06.2009**
(21) Anmeldenummer: 08010573.7
(22) Anmeldetag: 11.06.2008
(51) Int. Cl.: B01D 47/06, B05B 1/26, F24F 3/16

(54) **Luft-Reinigungsvorrichtung**

(30) Priorität: 28.06.2007 DE 202007009113 U
(71) Anmelder: Airclean Europe Limited, 35099 Burgwald (DE)
(72) Erfinder: Kowalewski, Klaus, 35099 Burgwald (DE)
(74) Vertreter: Buchhold, Jürgen

(57) **Zusammenfassung**

Die Erfindung betrifft eine Verteilerdüseneinrichtung (20) für eine Filtereinrichtung (4) einer Luft-Reinigungsvorrichtung (1) zum zerstäubten Verteilen eines flüssigen Mediums in einem aus der Umgebung angesaugten Luftstrom. Durch eine verbesserte, mehrstufig mit mindestens zwei tellerdüsenartigen Vertellerdüsen (21) ausgebildete Verteilerdüsenoinrichtung (20) und eine verbesserte Filtereinrichtung wird erreicht, dass große Mengen Umluft gereinigt werden können.

## Beschreibung

Die Erfindung betrifft eine Verteilerdüseneinrichtung für eine Filtereinrichtung einer Luft-Reinigungsvorrichtung, eine Filtereinrichtung für eine Luft-Reinigungsvorrichtung und eine Luft-Reinigungsvorrichtung gemäß dem Oberbegriff von Anspruch 1, Anspruch 20 bzw. Anspruch 21.

Bei Sanierungs- oder Renovierungsarbeiten, aber auch bei Schreinerarbeiten, Schleifarbeiten u. dgl. fallen oft große Mengen an Staub und Schmutz an. Diese verteilen sich gleichmäßig im Raum, selbst durch geschlossene Türen hindurch. Lüften hilft meist wenig. In engen oder geschlossenen Räumen ist die Belastung oft besonders intensiv. Die Arbeiten müssen daher in stark verunreinigter Umgebungsluft durchgeführt werden. Die gesundheitliche Belastung ist sehr hoch. Die Verwendung von Atemschutzmasken ist nicht selten hinderlich bei der Ausführung der Arbeiten.

Um dieser Beeinträchtigung zu begegnen, hat man Luft-Reinigungsvorrichtungen entwickelt. Diese saugen die staub- bzw. schmutzbeladene Umgebungsluft mit einem Gebläse an und leiten sie durch eine Filtereinrichtung oder mehrere Filtereinrichtungen hindurch. Die gereinigte Luft wird anschließend wieder in den Raum abgegeben oder nach außen geleitet. Finden mechanische Filtereinrichtungen Verwendung, so sind diese relativ großflächig auszubilden, um eine ausreichende Filterwirkung zu erzielen. Die Gebläseleistung muss entsprechend hoch gewählt werden, um einen ausreichenden Ansaugdruck zu erlangen. Darüber hinaus müssen die Filter regelmäßig gesäubert werden, was aufgrund der erneuten Staubfreisetzung nicht nur arbeitsaufwendig und belastend, sondern auf Dauer sehr teuer ist. Nach einiger Zeit müssen die Filtereinrichtungen sogar vollständig ausgetauscht werden.

DE-U1-203 02 152 schlägt ein mobiles Luftreinigungsgebläse vor, das die Staub- und Schmutzpartikel mit Hilfe von Wasser aus der Luft auswäscht. Es hat hierzu einen ersten Schacht mit seitlichen Lufteinlassöffnungen für die verunreinigte Luft und parallel dazu einen zweiten Schacht mit einer Luft-Ausblasöffnung für die gereinigte Luft. In einem Übergangsbereich zwischen dem ersten und dem zweiten Schacht wird mit einem horizontal angeordneten, längs geschlitzten Rohr ein Wasservorhang erzeugt, um die Staubund Schmutzpartikel aus der von dem Gebläse angesaugten Luft auszuwaschen. Die gesamte Vorrichtung steht in einer Wasserwanne, aus der das Wasser für die Erzeugung des Wasservorhangs gefördert und in die das verbrauchte Wasser wieder zurückgeleitet wird.

Von Nachteil hierbei ist, dass das Gebläse den Luftstrom durch einen flächigen, relativ dünnen Wasserschleier hindurchdrückt, so dass dieser wie ein Vorhang stellenweise auseinander geblasen wird. Innerhalb des Luftstroms befindliche Staubpartikel werden daher nicht oder nur unzureichend befeuchtet und damit nicht ausgewaschen. Überdies ist das gesamte Gerät relativ groß und unhandlich. Es besteht aus insgesamt zwei sperrigen Teilen, nämlich einem quaderförmigen Gehäuseteil und einem rechteckigen Aufsatzturm mit den Luft-Ausblasöffnungen. Hinzu kommt die Wasserwanne als Reservoir und Sammelbehältnis für das Flüssigmedium. Alle Teile müssen einzeln transportiert und jedes Mal neu zusammengesetzt werden. Der Arbeits- und Montageaufwand ist entsprechend hoch. Der konstruktive Aufwand führt zu relativ hohen Herstellkosten.

Weiter ist aus der EP 1 506 805 A1 eine Luft-Reinigungsvorrichtung bekannt. Diese ist als Saugvorrichtung ausgebildet. Sie besteht aus zwei koaxial angeordneten Metallrohren, nämlich einem Außenrohr und einem Innenrohr, die in einer mit Wasser gefüllten Wanne stehen. Auf dem Innenrohr ist ein Lüfter aufgesetzt, der umfangseitig dicht mit dem Außenrohr abschließt. Im unteren Bereich der Rohre befindet sich eine Wasserpumpe mit einem Steigrohr. Dieses sitzt zentrisch im Innenrohr und endet kurz vor der Auslassöffnung des Lüfters. Dort ist ein pilzförmiger Aufsatz vorgesehen, der das von der Pumpe geförderte Wasser nach außen und unten umlenkt. Seitliche Öffnungen im Außen- und Innenrohr dienen zum Ausströmen der gereinigten Luft, wobei die Öffnungen einander gegenüberliegend und höhenversetzt angeordnet sind, damit weder Wasser noch Staub aus der Vorrichtung austreten kann.

Eine solche Vorrichtung ist zwar sehr handlich. Sie hat jedoch den Nachteil, dass sie hinsichtlich der Kapazität an zu reinigender Umgebungsluft begrenzt ist und nicht für große Mengen an zu reinigender Umluft ausgelegt ist.

Ziel der Erfindung ist es, diese und weitere Nachteile des Standes der Technik zu überwinden und eine flexibel ausgebildete Luft-Reinigungsvorrichtung zu schaffen, die hinsichtlich ihrer Funktionsweise gegenüber dem Stand der Technik verbessert ist und insbesondere für große Mengen an zu reinigender Luft ausgelegt ist. Angestrebt werden daher insbesondere eine verbesserte Verteilerdüseneinrichtung und eine verbesserte Filtereinrichtung. Diese sollen, ebenso wie die Luft-Reinigungsanlage, insgesamt einfach und kostengünstig aufgebaut sein. Die gesamte Anlage soll einfach zu handhaben sowie leicht de- und wieder montierbar sein.

Diese Aufgabe wird von einer Verteilerdüseneinrichtung gemäß Anspruch 1, einer Filtereinrichtung gemäß Anspruch 20 und einer Luft-Reinigungsvorrichtung gemäß Anspruch 21 gelöst.

Die technische Lehre der vorliegenden Erfindung sieht vor, dass bei einer Verteilerdüseneinrichtung für eine Filtereinrichtung einer Luft-Reinigungsvorrichtung, zum zerstäubten Verteilen eines flüssigen Mediums in einem aus der Umgebung angesaugten Luftstrom, vorgesehen ist, dass die Verteilerdüseneinrichtung mehrstufig mit mindestens zwei tellerdüsenartigen Verteilerdüsen ausgebildet ist. Die Mehrstufigkeit wird dabei durch eine nachgeschaltete Anordnung von mindesten zwei Verteilerdüsen bewirkt. Die Verteilerdüsen können gleich ausgebildet sein oder sich hinsichtlich Größe, Durchflussmenge, Ausstrahlmenge, Durchflussquerschnitt, Form, Aufbau, Druckverteilung, Durchflussgeschwindigkeit und dergleichen unterscheiden.

In einer Ausführungsform ist vorgesehen, dass die Verteilerdüsen jeweils einen Zufuhrrohrleitungsabschnitt mit einer Austrittsöffnung und einem der Austrittsöffnung beabstandet gegenüberliegenden, insbesondere teller-, kuppel- oder glockenförmigen Prallkörper aufweisen. Die Zufuhrrohrleitung kann als Rohrabschnitt mit einer Außenwandung und einem von der Außenwandung umgebenden Leitungsabschnitt ausgebildet sein. Dabei kann die Zufuhrrohrleitung einen beliebigen Querschnitt, genauer Durchflussquerschnitt, aufweisen, bevorzugt einen kreisförmigen Querschnitt.

In einer weiteren Ausführungsform ist vorgesehen, dass der Prallkörper so ausgebildet, dass das durch die Austrittsöffnung auf den Prallkörper prallende flüssige Medium im Wesentlichen seitlich weg und/oder in einem Winkel nach unten und/oder nach oben gerichtet in dem Luftstrom von der Austrittsöffnung zerstäubt verteilt ist. Der Prallkörper fungiert somit als Umlenk- und/oder Zerstäubungskörper. Denn zum einen wird durch den Prallkörper das aufprallende flüssige Medium umgelenkt, bevorzugt umfänglich und/oder in einem Winkel im Bereich von >0° und < 180° zu einer Rohrleitungsachse, und zum anderen wird durch den Prallkörper das aufprallende flüssige Medium verteilt oder zerstäubt, um so eine Art Vorhang aus dem flüssigen Medium, umfassend Mediumtropfen, Mediumnebel und/oder Mediumstrahlen zu erzeugen. Hierzu weist der Prallkörper eine entsprechende Prallfläche oder entsprechende Prallflächen auf, auf welche das Medium aus der Austrittsöffnung kommend auftrifft. Die Prallflächen sind so angeordnet, dass diese eine Umlenkung und ein Verteilen des Mediumstrahls ermöglichen. Hierzu sind die Prallflächen bevorzugt geneigt zu der Rohrleitungsachse ausgerichtet.

In einem Ausführungsbeispiel ist der Prallkörper und damit auch die Prallfläche im Wesentlichen rotationssymmetrisch um eine Prallkörper-Mittelachse ausgebildet, um eine etwa rotationssymmetrisch gleichmäßige Verteilung des flüssigen Mediums zu bewirken. Auf diese Weise entsteht ein dichter Mediumvorhang und der Prallkörper ist leicht herzustellen.

Bevorzugt ist die Prallkörper-Mittelachse koaxial und/oder in Verlängerung zu einer Zufuhrrohrleitungsabschnitt-Mittelachse ausgerichtet. Durch die symmetrische Anordnung lässt sich ein gleichmäßiger Mediumvorhang realisieren.

In einem weiteren Ausführungsbeispiel ist der Zufuhrrohrleitungsabschnitt zumindest der Verteilerdüse der ersten Stufe mit einem Zufuhrrohr oder Steigrohr der Filtervorrichtung der Luft-Reinigungsvorrichtung verbindbar. Über das Zufuhrrohr wird das flüssige Medium von einer Quelle, bevorzugt druckbeaufschlagt, zu der ersten Verteilerdüse, betrachtet in Strömungsrichtung des Mediums, zugeführt. Der Zufuhrrohrleitungsabschnitt kann stoffschlüssig, formschlüssig und oder kraftschlüssig mit dem Zufuhrrohr, vorzugsweise abgedichtet, verbunden werden.

Die Zufuhrrohrleitungsabschnitte der nachgeschalteten Verteilerdüsen sind bevorzugt jeweils gegenüber den Zufuhrrohrleitungsabschnitten der vorgeschalteten Verteilerdüsen in Umfangsrichtung kleiner ausgebildet. Auf diese Weise lassen sich die benachbarten Zufuhrrohrleitungsabschnitte ineinander stecken. Zudem lässt sich über eine geeignete Größenabmessung eine gleichmäßige und/oder geregelte Zufuhr des Mediums an die nachgeschalteten Verteilerdüsen realisieren.

Deshalb ragt in einer Ausführungsform jeweils der Zufuhrrohrleitungsabschnitt einer der ersten Verteilerdüse nachgeschalteten Verteilerdüsen jeweils in den Zufuhrrohrleitungsabschnitt der jeweils vorgeschalteten Verteilerdüse zumindest teilweise herein. Auf diese Weise lässt sich auf einfache Weise eine mehrstufige Verteilerdüseneinrichtung realisieren. Die Zufuhrrohrleitungsabschnitte sind dabei etwa nach Art eines Teleskops ineinander gesteckt, wobei zwischen den Zufuhrrohrleitungsabschnitten in Umfangsrichtung jeweils mindestens ein die Austrittsöffnung definierender Spalt ausgebildet ist.

Entsprechend ist es vorgesehen, dass die ineinander hereinragenden Zufuhrrohrleitungsabschnitte so zueinander ausgerichtet sind, dass die entsprechende Austrittsöffnung des entsprechenden Zufuhrrohrleitungsabschnitts etwa spaltförmig oder ringförmig, das heißt mir einem Spiel in Umfangsrichtung, ausgebildet ist. Bei Zufuhrrohrleitungsabschnitten mit einem kreisrunden Querschnitt ist der Spalt kreisringförmig ausgebildet. Die Zufuhrrohrabschnitte sind vorzugsweise konzentrisch zueinander ausgerichtet. Bei anderen Geometrien ergeben sich entsprechende spaltförmige Öffnungen.

Um eine Rotationssymmetrie der Anordnung zu realisieren, sind die Mittelachsen der entsprechenden Zufuhrrohrleitungsabschnitte im Wesentlichen koaxial zueinander ausgebildet.

In einer Ausführungsform ist vorgesehen, dass die Zufuhrrohrleitungsabschnitte mehrerer Verteilerdüsen mit einem Zufuhrrohr oder Steigrohr der Filtervorrichtung der Luft-Reinigungsvorrichtung verbindbar sind. Hierbei sind die einzelnen Zufuhrrohrleitungsabschnitte nicht ineinander angeordnet, sondern als separate Arme oder Verzweigung von dem (Haupt-)Zufuhrrohr abzweigend ausgebildet.

In einem Ausführungsbeispiel ist vorgesehen, dass die Zufuhrrohrleitungsabschnitte entlang ihrer Mittelachsen zumindest abschnittsweise einen konstanten Durchflussquerschnitt aufweisen. Somit können die Zufuhrrohrleitungsabschnitte etwa zylindrisch ausgebildet sein. Die Zufuhrrohrleitungsabschnitte könne auch abschnittsweise zylindrisch ausgebildet sein, zum Beispiel mit mehreren Abschnitten mit unterschiedlichen aber konstanten Durchmessern, also gestuft ausgebildet sein. Alternativ ist in einem anderen Ausführungsbeispiel vorgesehen, dass die Zufuhrrohrleitungsabschnitte entlang ihrer Mittelachsen einen veränderlichen Durchflussquerschnitt aufweisen. So können die Zufuhrrohrleitungsabschnitte etwa sich verjüngend oder sich verbreiternd ausgebildet sein, um zum Beispiel ein entsprechendes Druckverhältnis an der entsprechenden Austrittsöffnung bereitzustellen.

Um eine stabile Anordnung zu realisieren, ist in einer Weiterbildung der Erfindung vorgesehen, dass die Zufuhrrohrleitungsabschnitte mittels entsprechender Halteeinrichtungen zueinander fixiert angeordnet sind. Auf diese Weise ist eine Relativbewegung der Zufuhrrohrleitungsabschnitte zueinander verhindert und ein einmal eingestelltes Druckverhältnis bzw. ein Spalt kann beibehalten werden.

Die Länge der Zufuhrrohrleitungsabschnitte von mindestens zwei Verteilerdüsen entlang ihrer Mittelachsen kann unterschiedlich ausgebildet sein. Hierdurch lässt sich ein zu erzeugender Mediumvorhang an entsprechende Umgebungsgeometrien anpassen.

In einer Ausgestaltung der Erfindung ist vorgesehen, dass die ineinander hereinragenden Zufuhrrohrleitungsabschnitte alle mittels einer einzigen Halteeinrichtung zueinander fixiert sind. Das heißt, die Zufuhrrohrabschnitte beginnen oder münden im Wesentlichen in einer Ebene in der Halteeinrichtung und sind unterschiedlich lang ausgebildet. Die Halteeinrichtung ist bevorzugt als ein in einem Zufuhrrohrleitungsabschnitt der ersten Verteilerdüse angeordneter Steg ausgebildet, an welchem das flüssige Medium vorbeiströmen kann.

Eine Ausführungsform der vorliegenden Erfindung sieht vor, dass der Prallkörper der letzten Stufe, das heißt der letzten Verteilerdüse in Strömungsrichtung, über eine Haltestange mit der Filtervorrichtung der Luft-Reinigungsvorrichtung verbindbar ist. Die Haltestange kann den Prallkörper durchdringen und in den entsprechenden Zufuhrrohrabschnitt hineinragen. Mindestens ein weiterer Prallkörper, bevorzugt alle weiteren Prallkörper, das heißt alle Prallkörper mit Ausnahme des Prallkörpers der letzten Stufe, sind bevorzugt an den Zufuhrrohrleitungsabschnitten der nachgeschalteten Verteilerdüsen angebracht. Auf diese Weise wird eine stabile Verteilerdüseneinrichtung gewährleistet.

Die technische Lehre der vorliegenden Erfindung sieht weiter vor, dass bei einer Filtereinrichtung für eine Luft-Reinigungsvorrichtung, mit einer erfindungsgemäßen Verteilerdüseneinrichtung zum zerstäubten Verteilen eines flüssigen Mediums in einem aus der Umgebung angesaugten Luftstrom vorgesehen ist, dass die Filtervorrichtung in eine Luft-Reinigungsvorrichtung einsetzbar ist.

Die Filtereinrichtung wird über eine Zuführleitung mit einem Fluid oder flüssigem Medium, bevorzugt mit Wasser, das druckbeaufschlagt ist, gespeist. Um das flüssige Medium zerstäubt in einem Luftstrom zu verteilen, weist die Filtereinrichtung eine Verteilerdüseneinrichtung auf. Die Verteilerdüseneinrichtung, welche das flüssige Medium in den Luftstrom zerstäubt verteilt, umfasst mehrere Verteilerdüsen. Jede Verteilerdüse weist einen Zufuhrrohrleitungsabschnitt auf, wobei an einem des Zufuhrrohrleitungsabschnitt abgewandten Ende der Verteilerdüse ein Prallkörper vorgesehen ist, der beabstandet zu dem Zufuhrrohrleitungsabschnitt angeordnet ist und so einen Spalt zum Austreten des flüssigen Mediums ausbildet. Zwischen der Wandung des Zufuhrrohrleitungsabschnitts und dem Prallkörper ist somit eine entsprechende Ausnehmungen ausgeformt, um das flüssige Medium durch diese in den Luftstrom einzubringen. Vorteilhaft ist eine schlitzförmige oder ringförmige Ausnehmungsform. Hierdurch lässt sich ein besonders geeigneter "Nebel" an flüssigem Medium in den Luftstrom bringen.

Die Verteilerdüseneinrichtung oder jeweils die Verteilerdüse weist eine Längsachse bzw. Mittelachse auf. Die Ausnehmungen der Verteilerdüsen zum Verteilen des flüssigen Mediums in dem Luftstrom sind zumindest teilweise als Spalte oder Umfangsöffnungen ausgebildet, die relativ zu der Achse konzentrisch verlaufende Schlitze oder Öffnungen, Aussparungen und dergleichen sind. Hierdurch lässt sich eine geeignete Einbringung des flüssigen Mediums in den Luftstrom realisieren. Der Verbrauch an flüssigem Medium in Bezug auf die Qualität der Reinigung ist somit optimiert. Zudem lassen sich die Ausnehmungen kostengünstig und auf einfache Weise herstellen.

Die technische Lehre der vorliegenden Erfindung sieht weiter vor, dass bei einer Luft-Reinigungsvorrichtung zum Entfernen von Staub und/oder Schmutz aus einer Umgebungsluft ein Gehäuse, in welchem eine Reinigungseinrichtung mit einer erfindungsgemäßen Filtereinrichtung aufgenommen ist, eine Ansaugeinrichtung, welche eine verschmutzte Umgebungsluft ansaugt, eine Leitungseinrichtung, welche sich von einer Ausgangsöffnung der Ansaugeinrichtung zu einer Einlassöffnung des Gehäuses erstreckt, und eine Auslasseinrichtung vorgesehen sind, wobei Umgebungsluft über die Leitungseinrichtung von der Ansaugeinrichtung in das Gehäuse durch die Reinigungseinrichtung geleitet wird und das durch die Reinigungseinrichtung durchströmte Fluid gereinigt über eine Ausblasöffnung der Auslasseinrichtung ausgeblasen wird.

Die Luft-Reinigungsvorrichtung ist somit modular aufgebaut, wobei die einzelnen Module über mindestens eine Leitungseinrichtung miteinander verbunden sind. Somit lassen sich auch Komponenten für große Mengen an zu reinigender Luft verwenden, ohne durch ein gemeinsames Gehäuse hinsichtlich der Größe begrenzt zu sein. Aufgrund der modularen Bauweise lässt sich die Vorrichtung auch einfach de- und wieder montieren. Es können stets neue Komponenten verwendet werden, so dass die Vorrichtung an die fortschreitende Entwicklung anpassbar ist.

Es ist vorgesehen, dass die Reinigungseinrichtung durch die Filtereinrichtung und einen Gehäuseabschnitt mit einer von der angesaugten Luft durchströmbaren Durchgangsöffnung, welche zumindest einen Teil der Filtereinrichtung umgibt, festgelegt ist. Dabei stellt der Gehäuseabschnitt die äußere Begrenzung dar, durch welche der Luftstrom bewegt wird, und bildet somit einen Kanal für die zu reinigende Umgebungsluft. Die Filtereinrichtung ist so ausgelegt, dass das aus der Verteilerdüseneinrichtung in den Luftstrom eingebrachte flüssige Medium den gesamten Querschnitt in einer Draufsicht in Richtung einer Längsachse durch den Kanal einnimmt, so dass die gesamte Luft den durch das flüssige Medium erzeugten (mehrstufigen) Vorhang oder Nebel passieren muss.

Weiter ist vorgesehen, dass das zerstäubte flüssige Medium über die Querschnittsfläche der Durchgangsöffnung des Gehäuseabschnitts der Reinigungsvorrichtung verteilbar ist. Zudem ist vorgesehen, dass die (Haupt-) Strömungsrichtung des Mediums im Wesentlichen mit der Strömungsrichtung des Luftstroms zusammenfällt. Dadurch wird zum einen verhindert, dass das flüssige Medium in das Gebläse eindringen kann. Zum anderen durchdringt das Medium den aus dem Gebläse kommenden Luftstrom nahezu vollständig, ohne diesen jedoch auseinander zu blasen, so dass selbst kleinste Staubpartikel auch im Inneren des Luftstroms von dem Medium erfasst und ausgespült werden.

Hierzu trägt auch bei, dass das zerstäubte flüssige Medium einen sich längs und quer zu einer durch die Durchgangsöffnung verlaufenden Achse erstreckenden und/oder erweiternden Nebelstrom bildet. Dieser sorgt für einen intensiven Kontakt zwischen dem zerstäubten Medium und der zu reinigenden Umgebungsluft in einem relativ großen Volumen, wodurch stets ein hoher Reinigungsgrad gewährleistet ist.

Der Luftstrom verläuft zumindest abschnittsweise koaxial zu der Längsachse des Gehäuseabschnitts, was die Prozessführung weiter vereinfacht und eine äußerst schlanke Bauweise der Luft-Reinigungsvorrichtung ermöglicht, deren Achse bevorzugt eine Vertikalachse ist.

Konstruktiv ist es günstig, dass die Ansaugeinrichtung ein Gebläse wie einen Lüfter umfasst, welcher separat zu dem Gehäuse aufstellbar ist. Hierdurch kann das Gehäuse schlank ausgelegt werden, ohne durch die Abmaße des Gebläses bestimmt zu werden. Das Gebläse lässt sich entsprechend der Anforderungen auswechseln und es lassen sich für große Mengen an zu reinigender Luft auch große Gebläse verwenden.

Die Verbindung von Gebläse und Gehäuse erfolgt dabei über eine Leitungseinrichtung. Bevorzugt umfasst die Leitungseinrichtung mindestens einen flexiblen Schlauch mit einem Mündungsbereich, welcher in die Einlassöffnung mündet. Über den flexiblen Schlauch lassen sich die Hauptkomponenten wie Gebläse und Gehäuse einfach und flexibel verbinden. Über einen Mündungsbereich ist die Leitungseinrichtung einfach mit dem Gehäuse verbindbar.

In einer Ausbildung weist das Gehäuse ein Außenrohr und zu diesem beabstandet ein Innenrohr auf, wobei der flexible Schlauch mit Mündungsbereich abschließend stirnseitig in das Innenrohr mündet. Dabei sind bevorzugt das Außenrohr und das Innenrohr koaxial zu der durch die Durchgangsöffnung verlaufenden Achse ausgebildet und über eine seitliche Überströmöffnung strömungsverbunden.

Die von dem flüssigen Medium gereinigte Luft kann dadurch ungehindert von dem Innenrohr in das Außenrohr und von dort nach außen (ins Freie) strömen.

Während die Ansaugöffnung des Gehäuses bevorzugt stirnseitig an dem Gehäuse ausgebildet ist, ist die Ausblasöffnung seitlich in dem Außenrohr ausgebildet. Damit wird eine unmittelbare Vermengung mit der zu reinigenden Luft vermieden. Durch die Überstromöffnung wird vermieden, dass das flüssige Medium direkt aus dem Gehäuse ausdringt, indem die Überströmöffnung und die Ausblasöffnung horizontal und/oder vertikal versetzt zueinander angeordnet sind, insbesondere gegenüberliegend und/oder höhenversetzt.

Eine Weiterbildung sieht vor, dass das Gehäuse im Wesentlichen einen runden oder eckigen Querschnitt aufweist. Das Außenrohr und das Innenrohr des Gehäuses sind im unteren Bereich über Stege und/oder einen Boden miteinander verbunden. Diese Ausbildung trägt zur kompakten und schlanken Bauweise der Vorrichtung sowie zu deren Stabilität bei.

Um eine einfache Handhabung zu realisieren, ist ein Sammelbehältnis zum Beinhalten und für die Zufuhr des flüssigen Mediums vom unteren Bereich des Innenrohrs gebildet. Insbesondere ist das Sammelbehältnis an einen gebäudeseitigen Abfluss anschließbar. Das verbrauchte flüssige Medium kann dabei mitsamt den ausgespülten Verunreinigungen direkt entsorgt werden.

Alternativ sieht eine Maßnahme vor, dass das Sammelbehältnis eine separate Wanne ist, die den unteren Bereich des Gehäuses umschließt, und dass im unteren Rand des Außenrohrs, im unteren Rand des Innenrohrs sowie im Boden Durchströmöffnungen für das flüssige Medium eingebracht sind. Hierdurch ist ein Einsatz an Orten ohne Abflussmöglichkeit möglich. Dadurch kann das flüssige Medium ungehindert von dem Innenrohr aus in die Wanne strömen. Aufgrund der kompakten Abmessungen der Luft-Reinigungsvorrichtung ist hierbei keine spezielle Wanne mit besonderen Maßen erforderlich. Man kann vielmehr nahezu jede, gewöhnlich auf Baustellen vorhandene Wasserwanne verwenden.

Um ein Überlaufen an flüssigem Medium zu verhindern oder um ein Nachfüllen des flüssigen Mediums bei zu geringem Mediumpegel zu ermöglichen, ist in dem Sammelbehältnis eine Schwimmschaltereinrichtung vorgesehen ist. Durch die Schwimmerschalteinrichtung ist gewährleistet, dass die Vorrichtung vor Beschädigung zum Beispiel durch einen nicht optimalen Pegel an flüssigem Medium geschützt wird. Zudem lässt sich de Zuund Abfuhr des flüssigen Mediums so automatisieren und geeignet regeln.

Um eine kompakte und handliche Bauweise zu realisieren, sieht eine weitere Maßnahme vor, dass die Filtereinrichtung koaxial zu der Achse ausgebildet ist. Das flüssige Medium kann nahezu von allen Seiten in den Luftstrom eindringen und die darin mitgeführten Verunreinigungen auswaschen, so dass der Wirkungsgrad der erfindungsgemäßen Vorrichtung trotz der kompakten Bauweise sehr hoch ist.

Um zu verhindern, dass sich Verteilerdüsen und/oder die Verteilerdüseneinrichtung in axialer Richtung versetzen oder sich von einer Zufuhrleitung oder dem Steigrohr löst, sieht eine Ausführungsform vor, dass die Verteilerdüseneinrichtung mittels einer Haltevorrichtung gegen axialen Versatz gesichert ist. Dadurch wird gerade bei hoher Druckbeaufschlagung des flüssigen Mediums eine sichere Funktionsweise der Verteilerdüseneinrichtung gewährleistet.

Dabei ist die Haltevorrichtung bevorzugt in das Gehäuse integriert.

In einer weiteren Ausführungsform ist das Fluidzuführrohr als Steigrohr ausgebildet, welches an eine Druckleitung anschließbar ist. Insbesondere ist das Steigrohr an eine Förderpumpe angeschlossen, die das flüssige Medium aus dem Sammelbehältnis fördert. Dabei ist die Förderpumpe über dem Boden des Sammelbehältnisses fixiert.

Auf diese Weise kann das Medium in einem geschlossenen Kreislauf wieder verwendet werden, was sich weiter günstig auf die Betriebskosten auswirkt.

Ein geeignetes und kostengünstig verfügbares flüssiges Medium ist Wasser. Deshalb ist es bevorzugt, dass das flüssige Medium Wasser, Leitungswasser und dergleichen ist.

Es können jedoch auch andere Flüssigkeiten verwendet werden, die geeignet sind, Staub- und Schmutzpartikel aus einem Luftstrom auszuwaschen. Überdies können weitere Schadstoffe aus der Luft ausgefiltert werden. Das Wasser kann zudem auch geeignete Zusätze enthalten.

Für eine optimale Handhabung und einen einfachen Transport der Luft-Reinigungsvorrichtung ist vorgesehen, dass das Gehäuse seitlich mit wenigstens einem Handgriff versehen ist.

Für einen einfachen Transport sind die Abmessungen des Gehäuses, insbesondere dessen Standfläche so bemessen, dass dieses auf einer Fläche, wie sie eine Europalette etwa festlegt, abstellbar oder unterbringbar ist. Dies ermöglicht einen einfacheren Transport auf einem geringen Raum.

Um die Reinigungsvorrichtung nach dem Transport einfach montieren und nach der Verwendung wieder rasch demontieren zu können, ist vorgesehen, dass das Steigrohr über eine Steckverbindung von oben axial in die Pumpe einsetzbar ist. Auf diese Weise ist ein rascher Zusammenbau des Steigrohrs und der Pumpe möglich. Auf das Steigrohr wird dann noch die Verteilerdüseneinrichtung aufgesetzt, welche dann mit einer Haltevorrichtung gegen axialen Versatz gesichert wird. Der gesamte Aufbau kann ohne Werkzeug erfolgen, was die Handhabung weiter vereinfacht. Zudem können seitlich an dem Gehäuse Rolleinrichtung und dergleichen angebracht sein, welche zum Beispiel in einer gekippten Stellung des Gehäuses zum Einsatz kommen und einen Transport erleichtert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Querschnitts-Seitenansicht einer Luft-Reinigungsvorrichtung mit einer Filtereinrichtung,
- Fig. 2a-b: jeweils eine schematische Darstellung einer Verteilerdüseneinrichtung im Querschnitt, in Fig. 2b einen Ausschnitt im Detail, geschnitten durch die Linie A-B gemäß Fig. 2a, und
- Fig. 3a-d: schematische Darstellungen eines Gehäuses.

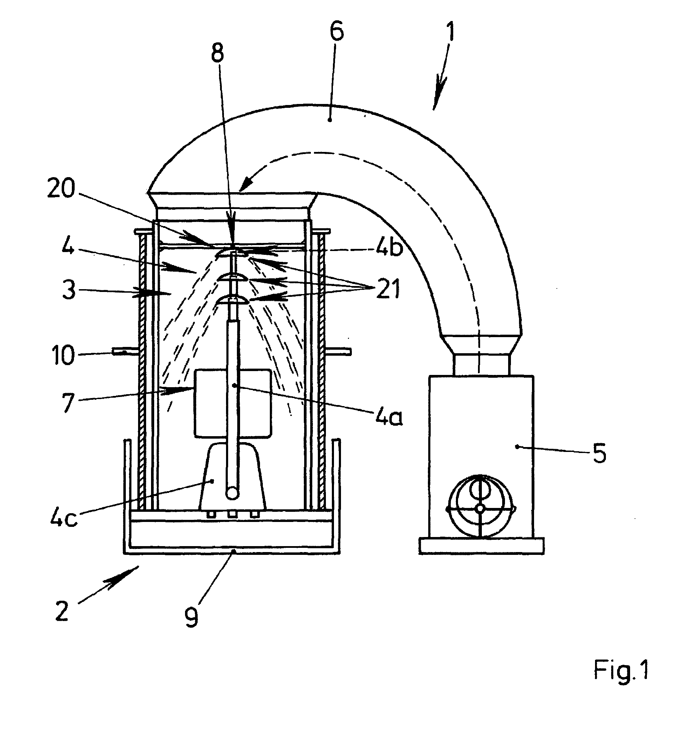

Fig. 1 zeigt schematisch eine Seitenansicht einer Luft-Reinigungsvorrichtung 1 zum Entfernen von Staub und/oder Schmutz aus einer Umgebungsluft. Die Luft-Reinigungsvorrichtung 1 umfasst ein Gehäuse 2, eine Reinigungseinrichtung 3 mit einer Filtereinrichtung 4, eine Ansaugeinrichtung 5, eine Leitungseinrichtung 6 und eine Auslasseinrichtung 7.

Die Ansaugrichtung 5, welche bevorzugt als Gebläse ausgebildet ist, ist getrennt von dem Gehäuse 2 angeordnet. In der dargestellten Ausführungsform ist das Gebläse über eine als flexibler Schlauch ausgebildete Leitungseinrichtung 6 mit dem Gehäuse 2 fluidisch verbunden. Der flexible Schlauch erstreckt sich von einer Ausgangsöffnung des Gebläses zu einer an der oberen Stirnseite des Gehäuses 2 befindlichen Eingangsöffnung. Dabei schließt der flexible Schlauch über einen Mündungsbereich mit der Eingangsöffnung des Gehäuses 2 ab.

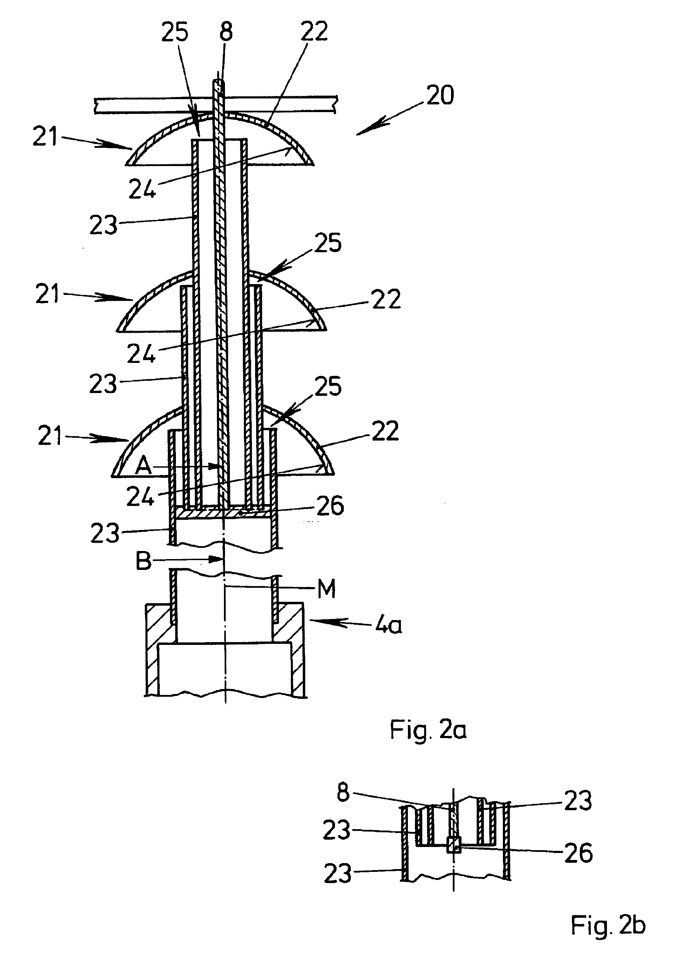

Das Gehäuse 2 umfasst eine Reinigungsvorrichtung 3, die über einen Gehäuseabschnitt und eine Filtereinrichtung 4 festgelegt ist. Der Gehäuseabschnitt umgibt die Filtereinrichtung 4 und weist eine Längsachse, genauer eine vertikale Längsachse auf. Die Filtereinrichtung 4 weist wiederum ein Fluidzuführrohr oder Steigrohr 4a und eine Verteilerdüseneinrichtung 20 auf. Die Verteilerdüseneinrichtung 20 ist an einem oberen Ende des vertikal angeordneten Steigrohrs 4a angeordnet, wobei die Verteilerdüseneinrichtung 20 bevorzugt mehrere Verteilerdüsen 21 umfasst, die mehrstufig, das heißt einander nachgeschaltet angeordnet sind. Die genaue Ausbildung der Verteilerdüsen 21 ist in Fig. 2a und 2b detaillierter dargestellt und wird im Zusammenhang mit diesen Zeichnungen weiter unten erläutert. Die letzte Verteilerdüse 21 in Strömungsrichtung (des Mediums) ist gegen einen vertikalen Versatz durch eine in das Gehäuse 2 integrierte Haltestange 8 gesichert.

Das Gehäuse 2 weist einen Bodenbereich oder einen Boden auf. Zusammen mit dem unteren Bereich des Gehäuses 2 ist somit ein Sammelbehältnis 9 für ein flüssiges Medium ausgebildet. Das flüssige Medium wird über eine Förderpumpe 4c, welche mit dem Steigrohr 4a verbunden ist, durch das Steigrohr 4a in die Verteilerdüseneinrichtung 20 gefördert. Von da tritt das Medium durch entsprechende Ausnehmungen aus und bildet einen Vorhang aus zerstäubtem flüssigem Medium. Damit die Verteilerdüseneinrichtung 20 sich nicht axial versetzt, ist die Haltestange 8 in dem Gehäuse 2 direkt über der Verteilerdüseneinrichtung 20 ausgebildet.
Die verschmutzte Umgebungsluft wird über die Ansaugvorrichtung 5 durch die Leitungseinrichtung 6 in das Gehäuse 2 durch die Reinigungsvorrichtung 4 geführt. Dabei durchläuft die zu reinigende Luft den Vorhang aus zerstäubtem, flüssigem Medium, wobei Schmutzpartikel ausgewaschen werden. Nach der erfolgten Reinigung wird die gereinigte Luft durch die Auslasseinrichtung 7 abgegeben. Dabei kann die Auslasseinrichtung 7 ebenfalls eine Leitungseinrichtung 6 umfassen.

Seitlich an dem Gehäuse 2 sind Handgriffe 10 ausgebildet, um die Handhabung insbesondere beim Transportieren der Luft-Reinigungsvorrichtung 1 zu vereinfachen.

Fig. 2a-b zeigen schematisch die Verteilerdüseneinrichtung 20 gemäß Fig. 1 im Querschnitt, Fig. 2 einen Ausschnitt im Detail, geschnitten entlang der Linie A-B gemäß Fig. 2a, seitlich gedreht um 90° gegenüber Fig. 2a.

Die Verteilerdüseneinrichtung 20 umfasst vorliegend drei Verteilerdüsen 21, die jeweils einen Prallkörper 22 und einen Zufuhrrohrleitungsabschnitt 23 umfassen. Die Prallkörper 22 sind im Wesentlichen tellerförmig oder glockenförmig ausgebildet und weisen an ihren dem jeweiligen Zufuhrrohrleitungsabschnitt 23 zugewandten Seiten eine Prallfläche 24 auf. Die Prallfläche 24 ist dabei so ausgebildet, dass ein aus einer Austrittsöffnung 25 des Zufuhrrohrleitungsabschnitts 23 auf die Prallfläche 24 ausströmendes flüssiges Medium seitlich abgelenkt wird. Hierzu ist die Prallfläche 24 geneigt zu einer Mittelachse M des entsprechenden Zufuhrrohrleitungsabschnitts 23 ausgerichtet. Vorliegend ist die Prallfläche 24 etwa parabelförmig oder glockenförmig ausgebildet. Die Verteilerdüsen 21 sind vom Grundsatz ähnlich aufgebaut und unterscheiden sich nur geringfügig, zum Beispiel in Ihren Abmaßen.

Die Zufuhrrohrleitungsabschnitte 23 sind vorliegend als kreiszylindrische Rohre ausgebildet, die entsprechend eine Austrittsöffnung 25 mit einem kreisförmigen Durchflussquerschnitt aufweisen. Das Material, aus welchem die Zufuhrrohrleitungsabschnitte 23 hergestellt sind, kann ein Kunststoff, ein Metall, eine Metalllegierung, Edelstahl oder dergleichen sein, welches zum Beispiel beschichtet sein kann.

Die Verteilerdüsen 21 sind mehrstufig angeordnet. Das heißt, die Verteilerdüsen 21 sind in Strömungsrichtung des flüssigen Mediums nacheinander geschaltet angeordnet, so dass mehrere Mediumvorhänge, bevorzugt vertikal versetzt zueinander, erzeugbar sind. Hierzu ragt der Zufuhrrohrleitungsabschnitt 23 einer nachgeschalteten Verteilerdüse 21 in den Zufuhrrohrleitungsabschnitt 23 der entsprechend vorgeschalteten Verteilerdüse 21 hinein. Die Zufuhrrohrleitungsabschnitte 23 der einzelnen Verteilerdüsen 21 sind entsprechend in Umfangsrichtung unterschiedlich groß bemessen, vorliegend mit einem unterschiedlichen Durchmesser, wobei das Außenmaß der nachgeschalteten Verteilerdüse 21 kleiner ist, als das innenmaß der vorgeschalteten Verteilerdüse 21. Der Unterschied von Außenmaß der nachgeschalteten Verteilerdüse 21 und dem Innenmaß der vorgeschalteten Verteilerdüse 21 ist so bemessen, dass ein Spalt, vorliegend ein Ringspalt verbleibt, durch welchen das flüssige Medium austreten kann. Der Spalt definiert die resultierende Austrittsöffnung für das flüssige Medium. Die erste Verteilerdüse 21 in Strömungsrichtung, das heißt die erste Stufe der Verteilerdüseneinrichtung 20, ist mit dem Steigrohr 4a verbunden. Dabei sind die entsprechenden Verbindungsbereiche von Verteilerdüse 21 und Steigrohr 4a so ausgebildet, dass diese abdichtend verbindbar sind.

Die Prallkörper 22 der Verteilerdüsen 21 sind jeweils an dem Zufuhrrohrleitungsabschnitt 23 der nachgeschalteten Verteilerdüse 21 angebracht, mit Ausnahme der letzten Verteilerdüse 21. Der Prallkörper 22 der letzten Verteilerdüse 21 in Strömungsrichtung, das heißt der letzten Stufe der Verteilerdüseneinrichtung 20, ist an einer Haltestange 8 befestigt. Die Haltestange 8 ragt dabei mit einem Ende in den Zufuhrrohrleitungsabschnitt der letzten Verteilerdüse 21 hinein. Mit dem anderen Ende ist die Haltestange 8 an einem Teil der Luft-Reinigungsvorrichtung 1 befestigt, bevorzugt klappbar befestigt.

Die Zufuhrrohrleitungsabschnitte 23 der Verteilerdüsen 21 sind gemäß Fig. 2a unterschiedlich lang ausgebildet und münden, mit Ausnahme des Zufuhrrohrleitungsabschnitts 23 der ersten Verteilerdüse 21, in einer gemeinsamen, als Haltesteg ausgebildeten Haltervorrichtung 26. An der Haltevorrichtung 26 sind die entsprechenden Enden der Zufuhrrohrleitungsabschnitte 23 gesichert, so dass ein Versatz der Zufuhrrohrleitungsabschnitte 23 verhindert ist. Der Haltesteg ist in dem Zufuhrrohrleitungsabschnitt 23 der ersten Verteilerdüse 21 gesichert. Der Zufuhrrohrleitungsabschnitt 23 der ersten Verteilerdüse 21 ist über die Verbindung mit dem Steigrohr 4a gegen einen Versatz gesichert.

Die im Wesentlichen als hohlzylindrische, sich entlang der Mittel- oder Längsachse M erstreckende, vorliegend drei Verteilerdüsen umfassende Verteilerdüseneinrichtung 20 weist über Ihren Umfang verteilt Öffnungen oder Ausnehmungen 4b auf, durch welche das flüssige Medium ausgestrahlt wird.

Fig. 2b zeigt einen Querschnitt der Verteilerdüseneinrichtung 20, geschnitten entlang der Schnittlinie A-B aus Fig. 2a. In diesem Querschnitt ist die Anordnung der Enden der Zufuhrrohrleitungsabschnitte 23 der entsprechenden Verteilerdüsen 21 im Bereich der als Haltesteg ausgebildeten Haltevorrichtung 26 zu sehen. Der Steg weist eine Quaderform auf und verläuft quer durch den Zufuhrrohrleitungsabschnitt 23 der ersten Verteilerdüse 21, wobei seitlich des Haltestegs ausreichend Platz zum Vorbeiströmen für das flüssige Medium vorgesehen ist. Der Haltesteg selbst ist mit der Haltestange 8 verbunden.

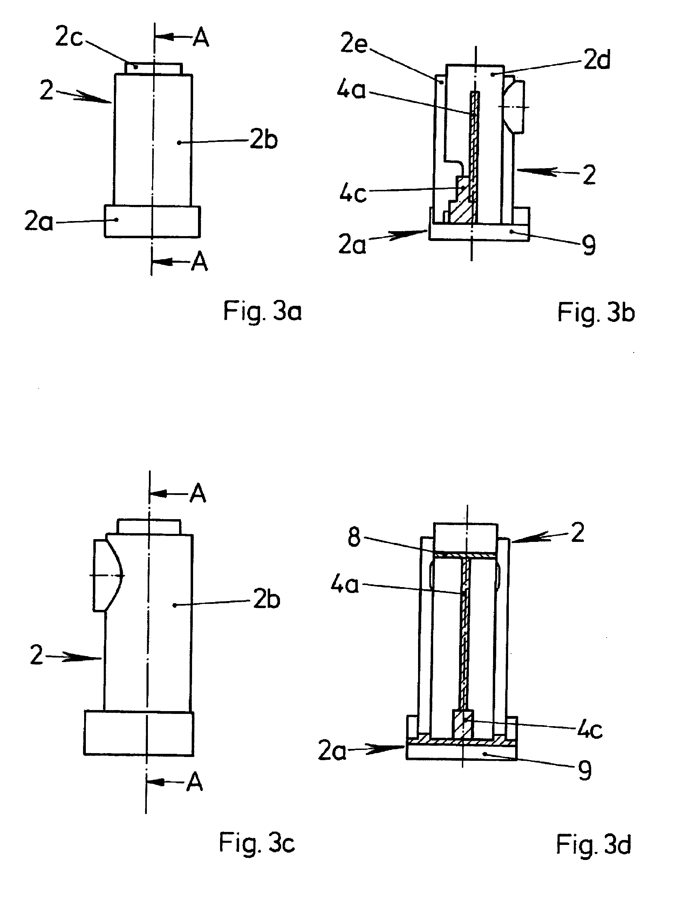

Fig. 3a-d zeigt schematische Darstellungen eines Gehäuses 2. Das Gehäuse ist im Wesentlichen zylindrisch aufgebaut und weist eine vertikale Längsachse auf. In Fig. 3a ist das Gehäuse 2 in einer ersten Seitenansicht dargestellt. Dabei weist das Gehäuse 2 im Wesentlichen drei Bereiche auf: einen Bodenbereich 2a, einen Mittelbereich 2b und einen oberen Bereich 2c. Diese Bereiche weisen jeweils konstante Außenabmaße in der Ansicht auf, wobei die Außenabmaße vom Bodenbereich 2a zum oberen Bereich 2c kleiner ausgebildet sind, was die Standsicherheit des Gehäuses 2 erhöht.

Fig. 3b zeigt einen Längsschnitt durch das Gehäuse 2, geschnitten entlang der Schnittlinie A-A in Fig. 3a. Schematisch ist hier das Steigrohr 4a und die Förderpumpe 4c dargestellt. Deutlich wird auch der Doppelrohr-Aufbau des Gehäuses mit einem Innenrohr 2d und einem Außenrohr 2e. Seitlich befindet sich eine Ausblasöffnung, durch welche die gereinigte Luft abgegeben wird. Der Bodenbereich 2a ist als Sammelbehältnis 9 ausgebildet, in dem das flüssige Medium gesammelt wird und so ein Reservoir bildet.

Fig. 3c zeigt das Gehäuse 2 in einer zu der in Fig. 2a um etwa 90° gedrehten Seitenansicht. Hierbei ist deutlich die in dem Mittelbereich 2b ausgebildete Ausblasöffnung zum Ausblasen der gereinigten Luft an die Umgebung zu erkennen.

Fig. 3d zeigt einen Längsschnitt des Gehäuses 2 entlang der Schnittlinie A-A in Fig. 3c. Der Bodenbereich 2a ist als Sammelbehältnis 9 ausgebildet. Die Förderpumpe 4c ist an einem Boden des Gehäuses 2 fixiert und fluidisch mit dem Steigrohr 4a verbunden. Axial über dem Steigrohr ist eine in das Gehäuse 2 integrierte Haltestange 8 ausgebildet, welche einen axialen Versatz der Verteilerdüseneinrichtung (nicht dargestellt) am Ende des Steigrohrs 4a verhindert.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Luft-Reinigungsvorrichtung
- 2: Gehäuse
- 2a: Bodenbereich
- 2b: Mittelbereich
- 3c: oberer Bereich
- 3: Reinigungsvorrichtung
- 4: Filtereinrichtung
- 4a: Steigrohr
- 4b: Ausnehmung (Öffnung)
- 4c: Förderpumpe
- 5: Ansaugeinrichtung
- 6: Leitungseinrichtung
- 7: Auslasseinrichtung
- 8: Haltestange
- 9: Sammelbehältnis
- 10: Handgriff
- 20: Verteilerdüseneinrichtung
- 21: Verteilerdüse
- 22: Prallkörper
- 23: Zufuhrrohrleitungsabschnitt
- 24: Prallfläche
- 25: Austrittsöffnung
- 26: Haltevorrichtung

- M: Mittelachse

## Patentansprüche

1. Verteilerdüseneinrichtung (20) für eine Filtereinrichtung (4) einer Luft-Reinigungsvorrichtung (1), zum zerstäubten Verteilen eines flüssigen Mediums in einem aus der Umgebung angesaugten Luftstrom, **dadurch gekennzeichnet, dass** die Verteilerdüseneinrichtung (20) mehrstufig mit mindestens zwei tellerdüsenartigen Verteilerdüsen (21) ausgebildet ist.

2. Verteilerdüseneinrichtung (20) nach Anspruch 1, **dadurch gekennzeichnet, dass** die Verteilerdüsen (21) jeweils einen Zufuhrrohrleitungsabschnitt (23) mit einer Austrittsöffnung (26) und einem der Austrittsöffnung (26) beabstandet gegenüberliegenden Prallkörper (22) aufweisen, wobei der Prallkörper (22) insbesondere teller-, kuppel- und/oder glockenförmig gestaltet ist.

3. Verteilerdüseneinrichtung (20) nach Anspruch 1 oder 2, **dadurch gekennzeichnet, dass** der Prallkörper (22) so ausgebildet, dass das durch die Austrittsöffnung auf den Prallkörper (22) prallende flüssige Medium im Wesentlichen seitlich weg und/oder in einem Winkel nach unten und/oder nach oben gerichtet in dem Luftstrom von der Austrittsöffnung (25) bzw. der Ausnehmung (4b) zerstäubt verteilt ist.

4. Verteilerdüseneinrichtung (20) nach einem der vorherigen Ansprüche 1 bis 3, **dadurch gekennzeichnet, dass** der Prallkörper (22) im Wesentlichen rotationssymmetrisch um eine Mittelachse des Prallkörpers ausgebildet ist, um eine etwa rotationssymmetrisch gleichmäßige Verteilung des flüssigen Mediums zu bewirken.

5. Verteilerdüseneinrichtung (20) nach einem der vorherigen Ansprüche 1 bis 4, **dadurch gekennzeichnet, dass** die Mittelachse des Prallkörpers (22) koaxial und/oder in Verlängerung zu einer Mittelachse (M) des Zufuhrrohrleitungsabschnitts (23) ausgerichtet ist.

6. Verteilerdüseneinrichtung (20) nach einem der vorherigen Ansprüche 1 bis 5, **dadurch gekennzeichnet, dass** der Zufuhrrohrleitungsabschnitt (23) zumindest der Verteilerdüse (21) der ersten Stufe mit einem Zufuhrrohr der Filtervorrichtung (4) der Luft-Reinigungsvorrichtung (1) verbindbar ist.

7. Verteilerdüseneinrichtung (20) nach einem der vorherigen Ansprüche 1 bis 6, **dadurch gekennzeichnet, dass** die Zufuhrrohrleitungsabschnitte (23) der nachgeschalteten Verteilerdüsen (21) jeweils gegenüber den Zufuhrrohrleitungsabschnitten (23) der vorgeschalteten Verteilerdüsen (21) in Umfangsrichtung kleiner ausgebildet sind.

8. Verteilerdüseneinrichtung (20) nach einem der vorherigen Ansprüche 1 bis 7, **dadurch gekennzeichnet, dass** der Zufuhrrohrleitungsabschnitt (23) der der ersten Verteilerdüse (21) nachgeschalteten Verteilerdüsen (21) jeweils in den Zufuhrrohrleitungsabschnitt (23) der jeweils vorgeschalteten Verteilerdüse (21) zumindest teilweise hereinragt.

9. Verteilerdüseneinrichtung (20) nach Anspruch 8, **dadurch gekennzeichnet, dass** die ineinander hereinragenden Zufuhrrohrleitungsabschnitte (23) so zueinander ausgerichtet sind, dass die entsprechende Austrittsöffnung (25) des entsprechenden Zufuhrrohrleitungsabschnitts (23) etwa spaltförmig oder ringförmig ausgebildet ist, insbesondere die Zufuhrrohrleitungsabschnitte (23) zueinander mit umfänglichem Spiel angeordnet sind.

10. Verteilerdüseneinrichtung (20) nach einem der vorherigen Ansprüche 1 bis 9, **dadurch gekennzeichnet, dass** die Mittelachsen (M) der entsprechenden Zufuhrrohrleitungsabschnitte (23) im Wesentlichen koaxial zueinander ausgebildet sind.

11. Verteilerdüseneinrichtung (20) nach einem der vorherigen Ansprüche 1 bis 6, **dadurch gekennzeichnet, dass** der Zufuhrrohrleitungsabschnitt (23) mehrerer Verteilerdüsen (21) mit einem Zufuhrrohr der Filtervorrichtung (4) der Luft-Reinigungsvorrichtung (1) verbindbar ist.

12. Verteilerdüseneinrichtung (20) nach einem der vorherigen Ansprüche 1 bis 11, **dadurch gekennzeichnet, dass** die Zufuhrrohrleitungsabschnitte (23) entlang ihrer Mittelachsen (M) zumindest abschnittsweise einen konstanten Durchflussquerschnitt aufweisen.

13. Verteilerdüseneinrichtung (20) nach einem der vorherigen Ansprüche 1 bis 12, **dadurch gekennzeichnet, dass** die Zufuhrrohrleitungsabschnitte (23) entlang ihrer Mittelachsen (M) einen veränderlichen Durchflussquerschnitt aufweisen.

14. Verteilerdüseneinrichtung (20) nach einem der vorherigen Ansprüche 1 bis 13, **dadurch gekennzeichnet, dass** die Zufuhrrohrleitungsabschnitte (23) mittels entsprechender Halteeinrichtungen (26) zueinander fixiert angeordnet sind.

15. Verteilerdüseneinrichtung (20) nach einem der vorherigen Ansprüche 1 bis 14, **dadurch gekennzeichnet, dass** die Länge der Zufuhrrohrleitungsabschnitte (23) von zumindest zwei Verteilerdüsen (21) entlang ihrer Mittelachsen (M) unterschiedlich ausgebildet ist.

16. Verteilerdüseneinrichtung (20) nach einem der vorherigen Ansprüche 1 bis 10 und 12 bis 15, **dadurch gekennzeichnet, dass** die ineinander hereinragenden Zufuhrrohrleitungsabschnitte (23) alle mittels einer einzigen Halteeinrichtung (26) zueinander fixiert sind.

17. Verteilerdüseneinrichtung (20) nach einem der vorherigen Ansprüche 1 bis 16, **dadurch gekennzeichnet, dass** die Halteeinrichtung (26) als ein in einem Zufuhrrohrleitungsabschnitt (23) der ersten Verteilerdüse (21) angeordneter Steg ausgebildet ist.

18. Verteilerdüseneinrichtung (20) nach einem der vorherigen Ansprüche 1 bis 17, **dadurch gekennzeichnet, dass** der Prallkörper (22) der letzten Stufe über eine Haltestange (8) mit der Filtervorrichtung (4) der Luft-Reinigungsvorrichtung (1) verbindbar ist.

19. Verteilerdüseneinrichtung (20) nach einem der vorherigen Ansprüche 1 bis 18, **dadurch gekennzeichnet, dass** mindestens ein Prallkörper (22) an dem Zufuhrrohrleitungsabschnitt (23) der nachgeschalteten Verteilerdüse (21) angebracht ist.

20. Filtereinrichtung (4) für eine Luft-Reinigungsvorrichtung (1), mit einer Verteilerdüseneinrichtung (20) nach einem der vorherigen Ansprüche 1 bis 19 zum zerstäubten Verteilen eines flüssigen Mediums in einem aus der Umgebung angesaugten Luftstrom, wobei die Filtereinrichtung (4) in eine Luft-Reinigungsvorrichtung (1) einsetzbar ist.

21. Luft-Reinigungsvorrichtung (1) zum Entfernen von Staub und/oder Schmutz aus einer Umgebungsluft mit einem Gehäuse (2), in welchem eine Reinigungseinrichtung (3) mit einer Filtereinrichtung (4) nach Anspruch 20 aufgenommen ist, mit einer Ansaugeinrichtung (5), welche eine verschmutzte Umgebungsluft ansaugt, mit einer Leitungseinrichtung (6), welche sich von einer Ausgangsöffnung der Ansaugeinrichtung (5) zu einer Einlassöffnung des Gehäuses (2) erstreckt, und mit einer Auslasseinrichtung (7),
wobei Umgebungsluft über die Leitungseinrichtung (6) von der Ansaugeinrichtung (5) in das Gehäuse (2) durch die Reinigungseinrichtung (3) geleitet wird und das durch die Reinigungseinrichtung (3) durchströmte Fluid gereinigt über eine Ausblasöffnung der Auslasseinrichtung (7) ausgeblasen wird.

22. Luft-Reinigungsvorrichtung (1) nach Anspruch 21, **dadurch gekennzeichnet, dass** die Reinigungseinrichtung (3) durch die Filtereinrichtung (4) und einen Gehäuseabschnitt mit einer von der angesaugten Luft durchströmbaren Durchgangsöffnung, welche zumindest einen Teil der Filtereinrichtung (4) umgibt, festgelegt ist.

23. Luft-Reinigungsvorrichtung nach Anspruch 21 oder 22, **dadurch gekennzeichnet, dass** das zerstäubte flüssige Medium über die Querschnittsfläche der Durchgangsöffnung des Gehäuseabschnitts der Reinigungseinrichtung (3) verteilbar ist.

24. Luft-Reinigungsvorrichtung (1) nach einem der Ansprüche 21 bis 23, **dadurch gekennzeichnet, dass** die (Haupt-)Strömungsrichtung des Mediums im Wesentlichen mit der Strömungsrichtung des Luftstroms zusammenfällt.

25. Luft-Reinigungsvorrichtung (1) nach einem der Ansprüche 21 bis 24, **dadurch gekennzeichnet, dass** das zerstäubte flüssige Medium einen sich längs und quer zu einer durch die Durchgangsöffnung verlaufenden Achse erstreckenden und/oder erweiternden Nebelstrom bildet.

26. Luft-Reinigungsvorrichtung (1) nach einem der vorherigen Ansprüche 21 bis 25, **dadurch gekennzeichnet, dass** der Luftstrom zumindest abschnittsweise koaxial zu der Achse geführt ist.

27. Luft-Reinigungsvorrichtung (1) nach einem der vorherigen Ansprüche 21 bis 26, **dadurch gekennzeichnet, dass** die Achse eine Vertikalachse ist.

28. Luft-Reinigungsvorrichtung (1) nach einem der vorherigen Ansprüche 21 bis 27, **dadurch gekennzeichnet, dass** die Ansaugeinrichtung (5) ein Gebläse wie einen Lüfter umfasst, welcher separat zu dem Gehäuse (2) aufstellbar ist.

29. Luft-Reinigungsvorrichtung (1) nach einem der vorherigen Ansprüche 21 bis 28, **dadurch gekennzeichnet, dass** die Leitungseinrichtung (6) mindestens einen flexiblen Schlauch mit einem Mündungsbereich umfasst, welcher in die Einlassöffnung mündet.

30. Luft-Reinigungsvorrichtung (1) nach einem der vorherigen Ansprüche 21 bis 29, **dadurch gekennzeichnet, dass** das Gehäuse (2) ein Außenrohr und zu diesem beabstandet ein Innenrohr aufweist, wobei der flexible Schlauch mit Mündungsbereich abschließend stirnseitig in das Innenrohr mündet.

31. Luft-Reinigungsvorrichtung (1) nach einem der vorherigen Ansprüche 21 bis 30, **dadurch gekennzeichnet, dass** das Außenrohr und das Innenrohr koaxial zu der durch die Durchgangsöffnung verlaufenden Achse ausgebildet sind und über eine seitliche Überströmöffnung strömungsverbunden sind.

32. Luft-Reinigungsvorrichtung (1) nach einem der vorherigen Ansprüche 21 bis 31, **dadurch gekennzeichnet, dass** die Ausblasöffnung seitlich in dem Außenrohr ausgebildet ist.

33. Luft-Reinigungsvorrichtung (1) nach einem der vorherigen Ansprüche 21 bis 32, **dadurch gekennzeichnet, dass** das Gehäuse (2) im Wesentlichen einen runden oder eckigen Querschnitt aufweist.

34. Luft-Reinigungsvorrichtung (1) nach einem der vorherigen Ansprüche 21 bis 33, **dadurch gekennzeichnet, dass** das Außenrohr und das Innenrohr des Gehäuses (2) im unteren Bereich über Stege und/oder einen Boden miteinander verbunden sind.

35. Luft-Reinigungsvorrichtung (1) nach einem der vorherigen Ansprüche 21 bis 34, **dadurch gekennzeichnet, dass** ein Sammelbehältnis (9) zum Beinhalten und für die Zufuhr des flüssigen Mediums vom unteren Bereich des Innenrohrs gebildet ist.

36. Luft-Reinigungsvorrichtung (1) nach einem der vorherigen Ansprüche 21 bis 35, **dadurch gekennzeichnet, dass** das Sammelbehältnis (9) an einen gebäudeseitigen Abfluss anschließbar ist.

37. Luft-Reinigungsvorrichtung (1) nach einem der vorherigen Ansprüche 21 bis 36, **dadurch gekennzeichnet, dass** das Sammelbehältnis (9) eine separate Wanne ist, die den unteren Bereich des Gehäuses (2) umschließt, und dass im unteren Rand des Außenrohrs, im unteren Rand des Innenrohrs sowie im Boden Durchströmöffnungen für das flüssige Medium eingebracht sind.

38. Luft-Reinigungsvorrichtung (1) nach einem der vorherigen Ansprüche 21 bis 37, **dadurch gekennzeichnet, dass** in dem Sammelbehältnis (9) eine Schwimmschaltereinrichtung vorgesehen ist.

39. Luft-Reinigungsvorrichtung (1) nach einem der vorherigen Ansprüche 21 bis 38, **dadurch gekennzeichnet, dass** die Filtereinrichtung (4) koaxial zu der Achse ausgebildet ist.

40. Luft-Reinigungsvorrichtung (1) nach einem der vorherigen Ansprüche 21 bis 39, **dadurch gekennzeichnet, dass** die Verteilerdüseneinrichtung (20) mittels einer Haltestange (8) gegen axialen Versatz gesichert ist.

41. Luft-Reinigungsvorrichtung (1) nach einem der vorherigen Ansprüche 21 bis 40, **dadurch gekennzeichnet, dass** die Haltestange (8) in das Gehäuse (2) integriert ist.

42. Luft-Reinigungsvorrichtung (1) nach einem der vorherigen Ansprüche 21 bis 41, **dadurch gekennzeichnet, dass** der Zufuhrrohrabschnitt (23) der Verteilerdüse (21) der ersten Stufe mit einem als Steigrohr (4a) ausgebildeten Fluidzufuhrrohr verbunden ist, welches an eine Druckleitung anschließbar ist.

43. Luft-Reinigungsvorrichtung (1) nach einem der vorherigen Ansprüche 21 bis 42, **dadurch gekennzeichnet, dass** das Steigrohr (4a) an eine Förderpumpe (4c) angeschlossen ist, die das flüssige Medium aus dem Sammelbehältnis (9) und/oder einer anderen Quelle fördert.

44. Luft-Reinigungsvorrichtung (1) nach einem der vorherigen Ansprüche 21 bis 43, **dadurch gekennzeichnet, dass** die Förderpumpe (4c) über den Boden des Sammelbehältnis (9) fixiert ist.

45. Luft-Reinigungsvorrichtung (1) nach einem der vorherigen Ansprüche 21 bis 44, **dadurch gekennzeichnet, dass** das flüssige Medium bzw. das Fluid Wasser ist.

46. Luft-Reinigungsvorrichtung (1) nach einem der vorherigen Ansprüche 21 bis 45, **dadurch gekennzeichnet, dass** das Gehäuse (2) seitlich mit wenigstens einem Handgriff (10) versehen ist.

47. Luft-Reinigungsvorrichtung (1) nach einem der vorherigen Ansprüche 21 bis 46, **dadurch gekennzeichnet, dass** die Abmessungen des Gehäuses (2) so bemessen sind, dass dieses auf einer Fläche, wie sie eine Europalette etwa festlegt, abstellbar oder unterbringbar ist.

48. Luft-Reinigungsvorrichtung (1) nach einem der vorherigen Ansprüche 21 bis 47, **dadurch gekennzeichnet, dass** das Steigrohr (4a) über eine Steckverbindung von oben axial in das Gehäuse (2) einsetzbar ist.
